# EUROPÄISCHE PATENTSCHRIFT

(11) **EP 1 182 237 B1**
(45) Veröffentlichungstag und Bekanntmachung des Hinweises auf die Patenterteilung: **27.06.2007**
(21) Anmeldenummer: 01119320.8
(22) Anmeldetag: 10.08.2001
(51) Int. Cl.: C09D 11/00, B41J 2/01

(54) **Tintensatz auf wässriger Basis sowie dessen Verwendung**
Water-based ink set and its use
Assortiment d'encres à base aqueuse et son utilisation

(30) Priorität: 26.08.2000 DE 10041982
(43) Veröffentlichungstag der Anmeldung: 27.02.2002
(73) Patentinhaber: J.S. STAEDTLER GMBH & CO, D-90427 Nürnberg (DE)
(72) Erfinder: Engel, Stefan, Dr., 90607 Rückersdorf (DE)

(56) Entgegenhaltungen:
- US-A- 5 534 051
- US-A- 5 888 284

## Beschreibung

Die Erfindung betrifft die Verwendung von Tintensätzen auf wässriger Basis als Proof-Tintensatz bei der Druckvorstufe im Off-Set- oder Tiefdruck, wofür piezo-Drop-on-Demand Systeme eingesetzt werden.

Mit Proof-Tinten werden sogenannte "Proofs", eine farbverbindliche Druckvorstufe erstellt, welche einem Off-Set- oder Tiefdruck vorgeschaltet werden, um ein späteres Off-Set- oder Tiefdruck-Druckbild vorab möglichst farbgetreu und mit einem von den verwendeten Farben aufgespannten Farbraum entsprechend darzustellen. Eine mögliche Grundlage des Offset-Farbraumes bildet der sogenannte Japan Off-Set Standard oder andere vergleichbare regionale Standards, wie beispielsweise die Euro-Skala.

Ein wichtiges Kriterium zur Beurteilung derartiger "Proofs" ist somit der Farbraum, der durch Farborte der Grund- und Mischfarben von Tinten eines Tintensatzes aufgespannt wird. Zur Erstellung einer aussagekräftigen Druckvorstufe oder "Proof" müssen gewisse Voraussetzungen erfüllt sein, wie eine hohe Auflösung im "Proof", d.h. mindestens 600dpi bei Drop-on-Demand Verfahren, weiche Farbverläufe, d.h. Einsatz von sog. "Light-Farben" bei magenta und cyan, ein möglichst großer Farbraum, wobei die Farborte der Grund und Mischfarben möglichst ähnlich dem Off-Set Grund- und Mischraum des jeweiligen Standard sind, sowie eine hohe Farbstabilität eines Ausdrucks auf speziellen Proof-Papieren für einen universellen Einsatz.

Tintensätze bzw. Tinten auf wässriger Basis für Drop-On-Demand Druckverfahren sind prinzipiell bekannt. Nachteilig bei diesen bekannten Tinten oder Tintensätzen für Drop-On-Demand Drucker ist es, daß die eingangs erwähnten Voraussetzungen für eine möglichst farbgetreue Druckvorstufe nur mit starken Einschränkungen oder gar nicht erfüllt werden.
Weiter hat sich als nachteilig herausgestellt, daß sich ein Druckbild einer Druckvorstufe mit Tinten gemäß dem Stand der Technik oft bereits trocken anfühlt, es jedoch noch nicht ist.
Es treten beim Trocknungsvorgang über Wochen hinweg sichtbare Farbverschiebungen auf, was kurzfristig zu einer falschen Beurteilung einer Druckvorstufe führt. Ein langer Trocknungsvorgang bei den Tinten des Standes der Technik beruht auf einen hohem Gehalt an Trocknungsverzögerern, welche zugesetzt sind, damit die Düsen des Drucksystems nicht eintrocknen und verstopfen.

**Aufgabe** der Erfindung ist es deshalb, Tintensätze auf wässriger Basis mit löslichen Farbstoffen zu schaffen, bei deren Verwendung in Ink-Jet-Systemen, insbesondere Drop-On-Demand Verfahren, die genannten Nachteile nicht auftreten und die mindestens einen Standard, z.B. den Japan Offset Standard möglichst gut überdecken und auf Druckmedien ohne spezielle Beschichtungen z.B. für Piezo-Drucker, schnell trocknen, stabile Farborte ergeben und zudem im Innenraum mehrere Wochen Lichtecht sind.

Diese Aufgabe wird mit den Merkmalen des Anspruchs 1 gelöst. Bevorzugte Ausführungsformen und vorteilhafte Weiterbildungen sind in den Ansprüchen 2 bis 14 umfaßt.

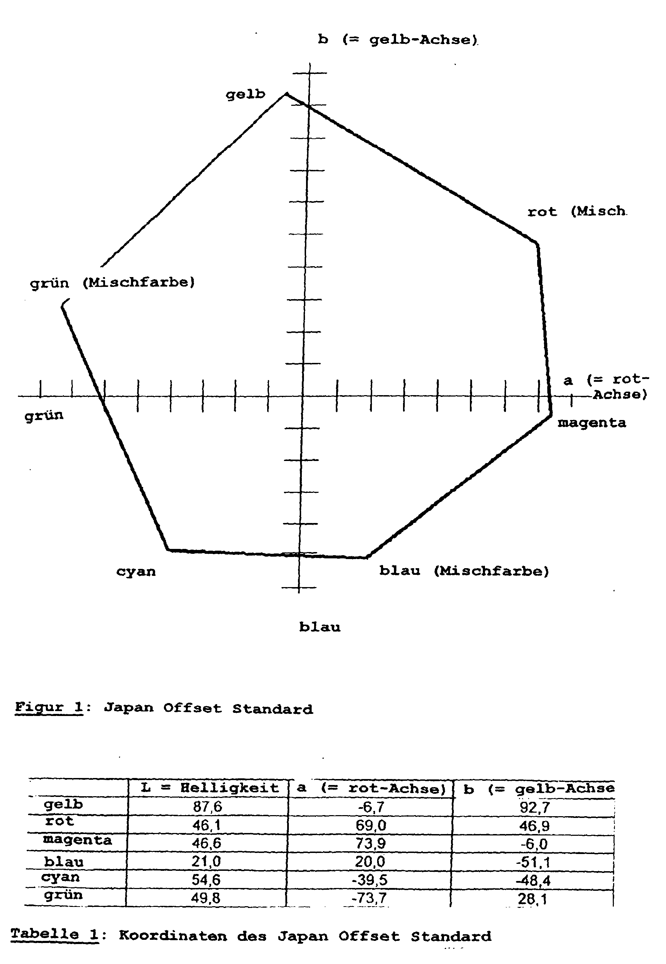

In der Figur 1 ist der Japan Off-Set Standart dargestellt, welcher eine Basis für eine Proof-Erstellung darstellt. In der Tabelle 1 zur Figur 1 sind die Koordinaten auf den achsen a=rot-Achse und b=gelb-Achse eingetragen, welche optimierte Farborte von Grundfarben festlegen, wobei mehrere Farborte wiederum den Farbraum aufspannen bzw. beschreiben. Ein Farbraum besitzt neben den dargestellten Achsen, a (rote/grün Achse)und b (gelbe/blau Achse) noch eine (hier nicht dargestellte) L-Achse, welche einen Grad für die Helligkeit darstellt. Zur vergleichenden Beurteilung eines Tintensatzes mit dem Japan Off-Set Standart genügt die Projektion der Farborte (a;b;L) in die Ebene, aufgespannt durch die Achsen a und b.

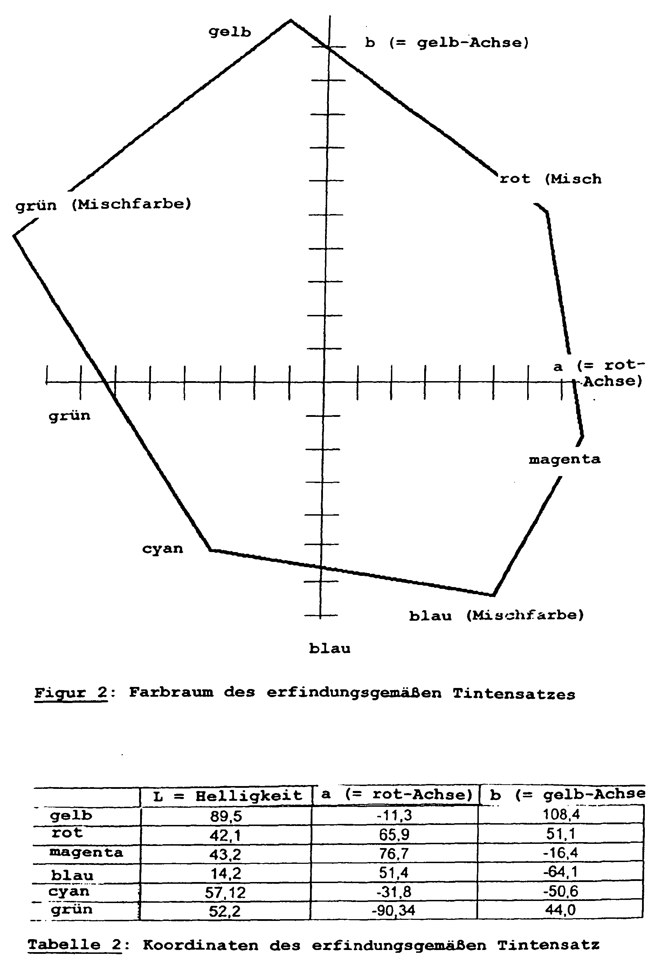

Figur 2 und Tabelle 2 zeigen die Positionen der einzelnen Tinten mit den zugehörigen Koordinaten (a, b, L) eines erfindungsgemäßen Tintensatzes. Hierbei ist insbesonders ersichtlich, daß auch die sehr wichtige "Gelbverschiebung" in den Grünen Bereich hin erzielt wird.

Der Farbraum der erfindungsgemäßen Tintensätze ist besser positioniert, d.h. dem Japan Off-Set Standart ähnlicher, als es der Farbraum der derzeit erhältlichen Tinten nach dem Stand der Technik ist, insbesondere hat sich gezeigt, daß Gelb mit einem leichten Grünstich sehr wichtig für die Erstellung von Proofs ist.
Bei der Verwendung der erfindungsgemäßen Tinten stimmen die sog. L-Werte, die Werte die die Helligkeit beschreiben, also die dritte Achse, im blauen Bereich weit besser mit dem Japan Off-Set Standard überein, als beim bekannten Stand der Technik.
Weiter trocknen die beanspruchten Tinten auf allen gängigen Ink-Jet-Medien rasch und ersparen dem Anwender die Anschaffung teurer speziell beschichteter Druckmedien für Piezo-Druck-Systeme.
Nach höchstens einem Tag Trockenzeit, treten keine sichtbaren Farbverschiebungen der Farborte mehr auf, d.h. keine Farbveränderungen wie beispielsweise Aufhellungen usw.
Die bevorzugt eingesetzten Farbstoffe bei den beanspruchten Tinten sind Reactive Yellow 37, Reactive Red 180, Direct Blue 199 und Acid Black 194.
Die erfindungsgemäßen Tinten zeichnen sich gegenüber dem Stand der Technik durch einen geringen Gehalt an Trocknungsverzögerern aus.
Es hat sich gezeigt, daß der Farbraum des Japan Offset Standart bei Verwendung der genannten Farbstoffe weitestgehend abgedeckt wird.

Die Erfindung soll anhand einiger Tintenbeispiele näher beschrieben werden.

### Beispiel 1 (Rahmenbeispiel):

| | |
|---|---|
| 35 bis 95 Gew.-% | Wasser (W), als Lösungsmittel (LM), |
| 3 bis 30 Gew.-% | Trocknungsverzögerer (TV), |
| 0,1 bis 30 Gew.-% | Farbmittel (FM), |
| 0 bis 1 Gew.-% | Konservierungsstoff (KM), |
| 0 bis 5 Gew.-% | pH-Einstellmittel und ggf. |
| 0 bis 5 Gew.-% | sonstige Zusätze. |

### Beispiel 2 (Cyan) (T1):

| | |
|---|---|
| 13 Gew.-% | Trocknungsverzögerer (TV), |
| 7 Gew.-% | Direct Blue 199 als Farbstoff (FS1), |
| 1 Gew.-% | Triethanolamin (TEA), |
| 0,1Gew.-% | Konservierungsstoff (KM), |
| Rest = Wasser (W) | |

### Beispiel 3 (Magenta) (T2):

| | |
|---|---|
| 23 Gew.-% | Trocknungsverzögerer (TV) |
| 2,1 Gew.-% | Reactive Red 180 als Farbstoff (FS2), |
| 1,0 Gew.-% | Triethanolamin (TEA), |
| 0,1 Gew.-% | Konservierungsstoff (KM), |
| Rest = Wasser (W). | |

### Beispiel 4 (gelbe Tinte) (T3):

| | |
|---|---|
| 22 Gew.-% | Trocknungsverzögerer (TV), |
| 4 Gew.-% | Reactive Yellow 37 als Farbstoff (FS3), |
| 1,8 Gew.-% | Triethanolamin (TEA), |
| 0,1 Gew.-% | Konservierungsmittel (KM), |
| Rest = Wasser (W) | |

### Beispiel 5 (schwarze Tinte) (T4):

| | |
|---|---|
| 21 Gew.-% | Trocknungsverzögerer (TV) |
| 8 Gew.-% | Acid Black 194 als Farbstoff (FS4), |
| 0,1 Gew.-% | Konservierungsstoff (KM), |
| 0.9 Gew.-% | Triethanolamin |
| Rest = Wasser (W) als Lösungsmittel (LM). | |

### Beispiel 6 ("light"/Cyan) (T1):

| | |
|---|---|
| 20 Gew.-% | Trocknungsverzögerer (TV), |
| 2,5 Gew.-% | Direct Blue 199 als Farbstoff (FS1), |
| 2 Gew.-% | Triethanolamin (TEA), |
| 0,1 Gew.-% | Konservierungsstoff (KM), |
| Rest = Wasser (W) | |

### Beispiel 7 ("light"/Magenta) (T2):

| | |
|---|---|
| 23 Gew.-% | Trocknungsverzögerer (TV) |
| 0,7 Gew.-% | Reactive Red 180 als Farbstoff (FS2), |
| 1,0 Gew.-% | Triethanolamin (TEA), |
| 0,1 Gew.-% | Konservierungsstoff (KM), |
| Rest = Wasser (W) | |

### Beispiel 8: Tintensatz (TS1):

Ein Tintensatz (TS1), bestehend aus cyan, magenta und gelber Tinte, weist jeweils Tinten der Beispiele 2, 3 und 4 auf.

### Beispiel 9: Tintensatz (TS2):

Ein Tintensatz (TS2), bestehend aus cyan, magenta, gelber und schwarzer Tinte, weist jeweils Tinten der Beispiele 2, 3, 4 und 5 auf.

Jede der Tinten aus den Beispielen 1 bis 7 enthält als Trocknungsverzögerer Glycerin und/oder ein Glycol-derivat wie Diethylenglycol und/oder mehrwertige Alkohole, wie 1,6-Hexandiol und/oder Pentaerythrit oder ein Gemisch aus diesen oder einiger dieser.

Gegebenfalls kann die Tinte als Netzmittel Fettsäurepolyglycolether, als Konservierungsmittel Triazin-Derivat und/oder zur Verkürzung der Trockenzeit auf Papier cyclische Ether oder Alkohole enthalten.

Die auf wässriger Basis aufgebauten Tinten bzw. Tintensätze eignen sich zum Schreiben, Zeichnen, Malen, Drucken, insbesondere auch für Ink-Jet- oder sonstige Druck- oder Markier-Verfahren.

Ein Tintensatz (TS), besteht in der Regel aus mehreren Tinten (T1, T2, T3, T...), rot bzw. magenta, blaue bzw. cyan und gelb, sowie ggf. schwarzer Tinte. Verwendet werden sie insbesondere in Piezo-Tintenstrahldruckern, welche nach dem Drop-On-Demand Verfahren arbeiten. Jede Tinte enthält einen löslichen Farbstoff (FS) als wesentliches Farbmittel (FM), ein Lösungsmittel (LM) sowie einen oder mehrere Trocknungsverzögerer (TV) und ggf. Konservierungsmittel (KM) und/oder weitere Zusätze (Z1, Z2, Z3, Z4, Z...). Das Lösungsmittel (LM) ist im wesentlichen Wasser (W). Jede Tinte (T1, T2, T3, T...) enthält mindestens einen wasserlöslichen Farbstoff (FS1, FS2, FS3, FS4) als jeweils wesentliches Farbmittel (FM). Eine erste Tinte (T1) enthält "Direct Blue 199" (FS1), eine zweite Tinte (T2) "Reactive Red 180" (FS2) und eine dritte Tinte (T3) "Reactive Yellow 37" (FS3), sowie eine ggf. vorhandene vierte Tinte (T4) "Acid Black 194" (FS4). Diese Farbstoffe in den einzelnen Tinten werden jeweils als ausschließliche oder als überwiegende bzw. hauptsächliche Farbstoffe (FS) eingesetzt.
Jede Tinte (T1, T2, T3, T...) enthält als Trocknungsverzögerer Glycerin (G), Diethylenglycol, 1,6-Hexandiol, Pentaerythrit oder ein Gemisch aus diesen.
Weitere Zusatzstoffe (ZS)in den Tinten sind Fettsäurepolyglycolether als Netzmittel, Triazin-Derivat als Konservierungsmittel und/oder cyclische Ether oder Alkohol zur Verkürzung der Trockenzeit auf Papier.
Die verwendeten Farbmittel (FM) sind im wesentlichen salzfrei. Desweiteren liegen die Farbmittel (FM) vor der Verarbeitung als Flüssigfarbstoff mit einem Farbstoffgehalt von 2 bis 50 % vor, wobei die Trägersubstanz Wasser und/oder Alkohol und/oder ein anderes organisches Lösungsmittel ist. Die Tinten (T2, T3, T4, T...) können als weiteren Zusatzstoffe (ZS) oder sonstige Zusätze (Z3, Z4, Z4) Triethanolamin (TEA), Tenside (T), Konservierungsmittel (KM) und/oder Antikorrosionsmittel (AKM) enthalten.
Das Tensid (T)kann ein Fettalkoholpolyglykoläther sein.
Das Konservierungsmittel (KM) kann eine Lösung von O- und N-Acetalen, halogenierten Säureamid-Derivaten und/oder N-, S-heterocyclischen Verbindungen sein.
Die erfindungsgemäßen Tinten (T1, T2, T3, T4, T...) enthalten jeweils 0,1 bis 30 Gew.-% Farbstoff (FS1, FS2, FS3, FS4, FS...) als Farbmittel (FM), 35 bis 95 Gew.-% Wasser (W) als Lösungsmittel (LM), 3 bis 30 Gew.-% Trocknungverzögerer (TV) und 0 bis 11 Gew.-% sonstige Zusätze (Z2, Z3, Z4, Z...). Verwendung findet ein derartiger Tintensatz (TS) als Medium für kurzfristig farbstabile Drucke aller Art.
Der Tintensatz (TS), bestehend aus mehreren Tinten (T1, T2, T3, T...) eingesetzt in Ink-Jet Systemen, insbesondere Drop-On-Demand Systemen, wird als Proof-Tintensatz, für die Erstellung von Testdrucken, als Druckvorstufen im Off-Set- oder Tiefdruck verwendet.

## Patentansprüche

1. Verwendung eines Tintensatzes(TS), bestehend aus mehreren Tinten (T1, T2, T3, T...), der mindestens eine rote bzw. magentafarbene, eine blaue bzw. cyanfarbene und eine gelbe, sowie ggf. auch eine schwarze Tinte enthält, wobei jede Tinte mindestens einen löslichen Farbstoff (FS) als wesentliches Farbmittel (FM) und Lösungsmittel (LM) sowie einen oder mehrere Trocknungsverzögerer (TV) und ggf. Konservierungsmittel (KM) und/oder weitere Zusätze (Z1, Z2, Z3, Z4, Z...) aufweist, wobei das Lösungsmittel (LM) im wesentlichen Wasser (W) ist, wobei die Tinten (T1, T2, T3, T...) mindestens einen wasserlöslichen Farbstoff (FS1, FS2, FS3, FS4) als jeweils wesentliches Farbmittel (FM) enthalten
**wobei** eine erste Tinte (T1) "Direct Blue 199" (FS1),
eine zweite Tinte (T2) "Reactive Red 180" (FS2) und
eine dritte Tinte (T3) "Reactive Yellow 37" (FS3),
sowie eine ggf. vorhandene vierte Tinte (T4) "Acid Black 194" (FS4) jeweils als ausschließlichen oder als überwiegenden bzw. hauptsächlichen Farbstoff (FS) aufweist,
in Piezo-Tintenstrahldruckern, welche nach dem Drop-On-Demand Verfahren arbeiten, als Proof-Tintensatz, zur Erstellung von Testdrucken als Druckvorstufen im Off-Set- oder Tiefdruck.

2. Verwendung eines Tintensatzes nach Anspruch 1,
wobei jede Tinte (T1, T2, T3, T...) als Trocknungsverzögerer Glycerin (G), Diethylenglycol, 1,6-Hexandiol und/oder Pentaerythrit oder ein Gemisch aus diesen oder einiger dieser enthält.

3. Verwendung eines Tintensatzes nach einem der vorhergehenden Ansprüche, wobei als weitere Zusatzstoffe (ZS) Fettsäurepolyglycolether als Netzmittel, Triazin-Derivat als Konservierungsmittel und/oder cyclische Ether oder Alkohol zur Verkürzung der Trockenzeit auf Papier enthalten sind.

4. Verwendung eines Tintensatzes nach einem der vorhergehenden Ansprüche, wobei das Farbmittel (FM) im wesentlichen salzfrei ist.

5. Verwendung eines Tintensatzes nach einem der vorhergehenden Ansprüche, wobei das Farbmittel (FM) vor der Verarbeitung als Flüssigfarbstoff mit einem Farbstoffgehalt von 2 bis 50 % vorliegt, wobei die Trägersubstanz hierbei Wasser und/oder Alkohol und/oder ein anderes organisches Lösungsmittel ist.

6. Verwendung eines Tintensatzes nach einem der vorhergehenden Ansprüche, wobei die Tinten (T2, T3, T4, T...) als weiteren Zusatzstoff (ZS) Triethanolamin (TEA) enthalten.

7. Verwendung eines Tintensatzes nach einem der vorhergehenden Ansprüche, wobei die Tinten (T1, T2, T3, T4, T...) als weitere Zusatzstoffe (ZS) bzw. als sonstigen Zusatz (Z3, Z4, Z4) Tenside (T), Konservierungsmittel (KM) und/oder Antikorrosionsmittel (AKM) enthalten.

8. Verwendung eines Tintensatzes nach einem der vorhergehenden Ansprüche, wobei die Tinten (T1, T2, T3, T4, T...) als sonstigen Zusatz (Z3, Z4, Z4) bzw. als Tensid (T) Fettalkoholpolyglykoläther enthalten.

9. Verwendung eines Tintensatzes nach einem der Ansprüche 1 bis 8, wobei das Konservierungsmittel (KM) eine Lösung von O- und N-Acetalen, halogenierten Säureamid-Derivaten und/oder N-, S-heterocyclischen Verbindungen ist.

10. Verwendung eines Tintensatzes nach einem der vorhergehenden Ansprüche, wobei die Tinten (T1, T2, T3, T4, T...) jeweils
| | |
|---|---|
| 0,1 bis 30 Gew.-% | Farbstoff (FS1, FS2, FS3, FS4, FS...) als Farbmittel (FM), |
| 35 bis 95 Gew.-% | Wasser (W) als Lösungsmittel (LM), |
| 3 bis 30 Gew.-% | Trocknungverzögerer (TV) und |
| 0 bis 11 Gew.-% | sonstige Zusätze (Z2, Z3, Z4, Z...) |
enthalten.

11. Verwendung eines Tintensatzes nach einem der vorhergehenden Ansprüche, wobei eine erste Tinte (T1)
7 Gew.-% Farbstoff (FS1) als Farbmittel (F),
13 Gew.-% Trocknungverzögerer (TV),
0,1 Gew.-% Konservierungsmittel (KM),
1 Gew.-% Triethanolamin (Z2) und den
Rest = Wasser (W), als Lösungsmittel (LM), enthält, wobei der Farbstoff (FS1) insbesondere ein "Direct Blue 199" - Farbstoff ist.

12. Verwendung eines Tintensatzes nach einem der vorhergehenden Ansprüche, wobei eine zweite Tinte (T2)
2,1 Gew.-% Farbstoff (FS2) als Farbmittel (FM),
23 Gew.-% Trocknungverzögerer (TV),
0,1 Gew.-% Konservierungsmittel (KM),
1 Gew.-% Triethanolamin (22) und den
Rest = Wasser (W), als Lösungsmittel (LM), enthält, wobei der Farbstoff (FS2) insbesondere ein "Reactive Red 180" - Farbstoff ist.

13. Verwendung eines Tintensatzes nach einem der vorhergehenden Ansprüche, wobei eine dritte Tinte (T3)
4 Gew.-% Farbstoff (FS3) als Farbmittel (FM),
22 Gew.-% Trocknungverzögerer (TV),
0,1 Gew.-% Konservierungsmittel (KM),
1,8 Gew.-% Triethanolamin (Z2) und den
Rest = Wasser (W), als Lösungsmittel (LM), enthält, wobei der Farbstoff (FS3) insbesondere ein "Reactive Yellow 37" - Farbstoff ist.

14. Verwendung eines Tintensatzes nach einem der vorhergehenden Ansprüche, wobei eine vierte Tinte (T4)
8 Gew.-% Farbstoff (FS4) als Farbmittel (FM),
21 Gew.-% Trocknungverzögerer(TV),
0,1 Gew.-% Konservierungsmittel (KM)
0,9 Gew.-% Triethanolamin und den
Rest = Wasser (W), als hauptsächliches Lösungsmittel (LM), enthält, wobei der Farbstoff (FS4) insbesondere ein "Acid Black 194" - Farbstoff ist.

## Claims

1. Use of an ink set (TS), consisting of several inks (T1, T2, T3, T ...), which contain at least one red or magenta-coloured, a blue or cyan-coloured and a yellow as well as optionally also a black ink, wherein each ink comprises at least one soluble dye (FS) as essential colorant (FM) and solvent (LM) as well as one or more drying retarders (TV) and optionally conserving agents (KM) and/or further additives (Z1, Z2, Z3, Z4, Z ...), wherein the solvent (LM) is substantially water (W), wherein the inks (T1, T2, T3, T ...) contain at least one water-soluble dye (FS1, FS2, FS3, FS4) as respective essential colorant (FM), wherein, as respective exclusive or predominant or principal dye (FS), a first ink (T1) comprises 'Direct Blue 199' (FS1), a second ink (T2) comprises 'Reactive Red 180' (FS2) and a third ink (T3) comprises 'Reactive Yellow 37' (FS3), as well as an optionally present fourth ink (T4) comprises 'Acid Black 194', in piezo ink-jet printers, which operate according to the drop-on-demand method, as proof ink set, for creating test prints as print prepress stages in offset or intaglio printing.

2. Use of an ink set according to claim 1, wherein each ink (T1, T2, T3, T ...) contains, as drying retarder, glycerol (G), diethyleneglycol, 1,6-hexanediol and/or pentaerythrite or a mixture of these or some of these.

3. Use of an ink set according to one of the preceding claims, wherein fatty acid polyglycol ether as cross-linking agent, triazine derivative as conserving agent and/or cyclic ether or alcohol for shortening the drying time on paper are included as further additives (ZS).

4. Use of an ink set according to one of the preceding claims, wherein the colorant (FM) is substantially salt-free.

5. Use of an ink set according to one of the preceding claims, wherein the colorant (FM) prior to processing as liquid dye is present with a dye content of 2 to 50%, wherein the carrier substance in that case is water and/or alcohol and/or another organic solvent.

6. Use of an ink set according to one of the preceding claims, wherein the inks (T2, T3, T4, T ...) contain triethanolamine (TEA) as further additive (ZS).

7. Use of an ink set according to one of the preceding claims, wherein the inks (T2, T3, T4, T ...) contain surfactant (T), preserving agent (KM) and/or anti-corrosion agent (AKM) as further additives (ZS) or as other additive (Z3, Z4, Z4).

8. Use of an ink set according to one of the preceding claims, wherein the inks (T2, T3, T4, T ...) contain fatty alcohol polyglycolether as additional additive (Z3, Z4, Z4) or as surfactant (T).

9. Use of an ink set according to one of claims 1 to 8, wherein the conserving agent (KM) is a solution of O-acetals and N-acetals, halogenated acid-amide derivatives and/or N-heterocyclic, S-heterocyclic compounds.

10. Use of an ink set according to one of the preceding claims, wherein the inks (T1, T2, T3, T4, T ...) respectively contain
| | |
|---|---|
| 0.1 to 30 weight % | dye (FS1, FS2, FS3, FS4, FS ...) as colorant (FM), |
| 35 to 95 weight % | water (W) as solvent (LM), |
| 3 to 30 weight % | drying retarder (TV) and |
| 0 to 11 weight % | other additives (Z2, Z3, Z4, Z...). |

11. Use of an ink set according to one of the preceding claims, wherein a first ink (T1) contains
| | |
|---|---|
| 7 weight % | dye (FS1) as colorant (F), |
| 13 weight % | drying retarder (TV), |
| 0.1 weight % | conserving agent (KM), |
| 1 weight % | triethanolamine (Z2) and |
| the rest = water (W) as solvent (LM), wherein the dye (FS1) is, in particular, a 'Direct Blue 199' dye. | |

12. Use of an ink set according to one of the preceding claims, wherein a second ink (T2) contains
| | |
|---|---|
| 2.1 weight % | dye (FS2) as colorant (FM), |
| 23 weight % | drying retarder (TV), |
| 0.1 weight % | conserving agent (KM), |
| 1 weight % | triethanolamine (Z2) and |
| the rest = water (W) as solvent (LM), wherein the dye (FS2) is, in particular, a 'Reactive Red 180' dye. | |

13. Use of an ink set according to one of the preceding claims, wherein a third ink (T3) contains
| | |
|---|---|
| 4 weight % | dye (FS3) as colorant (FM), |
| 22 weight % | drying retarder (TV), |
| 0.1 weight % | conserving agent (KM), |
| 1.8 weight % | triethanolamine (Z2) and |
| the rest = water (W) as solvent (LM), wherein the dye (FS3) is, in particular, a 'Reactive Yellow 37' dye. | |

14. Use of an ink set according to one of the preceding claims, wherein a fourth ink (T4) contains
| | |
|---|---|
| 8 weight % | dye (FS4) as colorant (FM), |
| 21 weight % | drying retarder (TV), |
| 0.1 weight % | conserving agent (KM), |
| 0.9 weight % | triethanolamine and |
| the rest = water (W) as solvent (LM), wherein the dye (FS4) is, in particular, a 'Acid Black 194' dye. | |

## Revendications

1. Utilisation d'un assortiment ou jeu d'encres (TS) composé de plusieurs encres (T1, T2, T3, T...), qui contient au moins une encre rouge ou de couleur magenta, une encre bleue ou de couleur cyan et une encre jaune, ainsi qu'éventuellement aussi une encre noire, dans laquelle chaque encre présente au moins une matière colorante soluble (FS) en tant que colorant essentiel (FM) et des solvants (LM), ainsi qu'un ou plusieurs retardateurs de séchage (TV) et éventuellement des conservateurs (KM) et/ou d'autres additifs (Z1, Z2, Z3, Z4, Z...), le solvant (LM) étant essentiellement de l'eau (W), les encres (T1, T2, T3, T...) contenant au moins une matière colorante hydrosoluble (FS1, FS2, FS3, FS4) en tant que chaque colorant hydrosoluble essentiel (FM), une première encre (T1) présentant «Direct Blue 199» (FS1), une seconde encre (T2) « Reactive Red 180 » (FS2) et une troisième encre (T3) « Reactive Yellow 37 » (FS3), ainsi qu'éventuellement une quatrième encre (T4) « Acid Black 194 » (FS4) respectivement en tant que matière colorante exclusive ou en tant que matière colorante prépondérante ou principale (FS), dans des imprimantes piézo à jet d'encre qui travaillent selon le principe du jet d'encre contrôlé, en tant qu'assortiment ou jeu d'encres pour épreuves pour élaborer des impressions d'essai en tant qu'étapes préalables à l'impression dans l'impression offset ou l'héliogravure.

2. Utilisation d'un assortiment d'encres selon la revendication 1, dans laquelle chaque encre (T1, T2, T3, T...) contient en tant que retardateur de séchage de la glycérine (G), du diéthylèneglycol, du 1,6-hexanediol et/ou du pentaérythritol ou un mélange de ces composants ou de certains de ceux-ci.

3. Utilisation d'un assortiment d'encres selon l'une des revendications précédentes, dans laquelle sont contenus en tant qu'additifs supplémentaires (ZS) du polyglycoléther d'acides gras en tant qu'agent mouillant, un dérivé de triazine en tant que conservateur et/ou des éthers cycliques ou un alcool pour réduire le temps de séchage sur le papier.

4. Utilisation d'un assortiment d'encres selon l'une des revendications précédentes, dans laquelle le colorant (FM) est essentiellement exempt de sel.

5. Utilisation d'un assortiment d'encres selon l'une des revendications précédentes, dans laquelle le colorant (FM) est présent avant le traitement en tant que matière colorante fluide avec une teneur en matière colorante comprise entre 2 et 50 %, la substance de support étant ici l'eau et/ou un alcool et/ou un autre solvant organique.

6. Utilisation d'un assortiment d'encres selon l'une des revendications précédentes, dans laquelle les encres (T2, T3, T4, T...) contiennent en tant qu'autre additif (ZS) de la triéthanolamine (TEA).

7. Utilisation d'un assortiment d'encres selon l'une des revendications précédentes, dans laquelle les encres (T1, T2, T3, T4, T...) contiennent en tant qu'additifs supplémentaires (ZS), respectivement, en tant qu'autre additif (Z3, Z4, Z5) des tensioactifs (T), des conservateurs (KM) et/ou des agents anticorrosion (AKM).

8. Utilisation d'un assortiment d'encres selon l'une des revendications précédentes, dans laquelle les encres (T1, T2, T3, T4, T...) contiennent en tant qu'autre additif (Z3, Z4, Z5) ou en tant que tensioactif (T), du polyglycoléther d'alcool gras.

9. Utilisation d'un assortiment d'encres selon l'une des revendications 1 à 8, dans laquelle le conservateur (KM) est une solution de O- et de N-acétals, de dérivés halogénés d'amides d'acides et/ou de composés N-, S-hétérocycliques.

10. Utilisation d'un assortiment d'encres selon l'une des revendications précédentes, dans laquelle les encres (T1, T2, T3, T4, T...) contiennent respectivement
| | |
|---|---|
| 0,1 à 30 % en masse | de matière colorante (FS1, FS2, FS3, FS4, FS...) en tant que colorant (FM), |
| 35 à 95 % en masse | d'eau (W) en tant que solvant (LM), |
| 3 à 30 % en masse | de retardateur de séchage (TV) et |
| 0 à 11 % en masse | d'autres additifs (Z2, Z3, Z4, Z...). |

11. Utilisation d'un assortiment d'encres selon l'une des revendications précédentes, dans laquelle une première encre (T1) contient
| | |
|---|---|
| 7 % en masse | de matière colorante (FS1) en tant que colorant (FM), |
| 13 % en masse | de retardateur de séchage (TV), |
| 0,1 % en masse | de conservateur (KM), |
| 1 % en masse | de triéthanolamine (Z2) et |
| le reste d'eau (W), en tant que solvant (LM), | |
| la matière colorante (FS1) étant en particulier une matière colorante « Direct Blue 199 ». | |

12. Utilisation d'un assortiment d'encres selon l'une des revendications précédentes, dans laquelle une seconde encre (T2) contient
| | |
|---|---|
| 2,1 % en masse | de matière colorante (FS2) en tant que colorant (FM), |
| 23 % en masse | de retardateur de séchage (TV), |
| 0,1 % en masse | de conservateur (KM), |
| 1 % en masse | de triéthanolamine (Z2) et |
| le reste d'eau (W), en tant que solvant (LM), | |
| la matière colorante (FS2) étant en particulier une matière colorante « Reactive Red 180 ». | |

13. Utilisation d'un assortiment d'encres selon l'une des revendications précédentes, dans laquelle une troisième encre (T3) contient
| | |
|---|---|
| 4 % en masse | de matière colorante (FS3) en tant que colorant (FM), |
| 22 % en masse | de retardateur de séchage (TV), |
| 0,1 % en masse | de conservateur (KM), |
| 1,8 % en masse | de triéthanolamine (Z2) et |
| le reste d'eau (W), en tant que solvant (LM), | |
| la matière colorante (FS3) étant en particulier une matière colorante « Reactive Yellow 37 ». | |

14. Utilisation d'un assortiment d'encres selon l'une des revendications précédentes, dans laquelle une quatrième encre (T4) contient
| | |
|---|---|
| 8 % en masse | de matière colorante (FS4) en tant que colorant (FM), |
| 21 % en masse | de retardateur de séchage (TV), |
| 0,1 % en masse | de conservateur (KM), |
| 0,9 % en masse | de triéthanolamine, et |
| le reste d'eau (W), en tant que solvant principal (LM), | |
| la matière colorante (FS4) étant en particulier une matière colorante « Acid Black 194 ». | |
